Europäisches Patentamt

(19) European Patent Office

Office européen des brevets

(11) Publication number: **0 057 074**
**B2**

## (12) NEW EUROPEAN PATENT SPECIFICATION

(45) Date of publication of the new patent specification :
07.09.88

(51) Int. Cl.⁴ : **G 11 B 27/32**, G 11 B 27/02

(21) Application number : **82300239.9**

(22) Date of filing : **18.01.82**

(54) Time code signal generators.

(30) Priority : **22.01.81 JP 8206/81**

(43) Date of publication of application :
**04.08.82 Bulletin 82/31**

(45) Publication of the grant of the patent :
**27.12.84 Bulletin 84/52**

(45) Mention of the opposition decision :
**07.09.88 Bulletin 88/36**

(84) Designated contracting states :
**AT DE FR GB NL**

(56) References cited :
DE-B- 2 642 021
FR-A- 2 361 029
GB-A- 2 008 364
GB-A- 2 020 516
GB-A- 2 067 053
SMPTE JOURNAL, vol. 88, no. 10, October 1979,
pages 712-715, New York (USA) ·
SMPTE JOURNAL, vol. 88, no. 12, December 1979,
pages 831-834, New York (USA)
"Radio Mentor Electronic", 1977, Heft 8, pp. 325-327
"Radio Mentor Electronics", 1977, Heft 7, pp. 266-270

(73) Proprietor : **SONY CORPORATION**
**7-35 Kitashinagawa 6-Chome Shinagawa-ku**
**Tokyo 141 (JP)**

(72) Inventor : **Mita, Michio**
**937-5 Tsumada Atsugi-shi**
**Kanagawa-ken (JP)**
Inventor : **Takayama, Jun**
**2-18-9 Tamagawakuen Machida-shi**
**Toyko (JP)**

(74) Representative : **Thomas, Christopher Hugo et al**
**D Young & Co 10 Staple Inn**
**London WC1V 7RD (GB)**

## Description

This invention relates to time code signal generators. Such generators are used with video tape recorder (VTR) apparatus, particularly with apparatus having a tape editing capability. Embodiments of the invention can provide a time code signal in dependence on an already recorded time code signal for use where the recorded time code signal is interrupted by a drop-out or ends at an editing point.

When a video signal is recorded using a VTR, it is common for a time code signal indicating the absolute time of the video signal to be recorded simultaneously with the video signal.

As such a time code signal, a Society of Motion Picture and Television Engineers (SMPTE) time code signal and a European Broadcasting Union (EBU) time code signal are respective standards for National Television Systems Committee (NTSC) and International Radio Consultative Committee (CCIR) television signals. These time code signals are formed of a binary signal for indicating hours, minutes, seconds and the frame number in every frame of the video signal, and are used, for example, as address signals during electronic editing of a tape.

It is usual for the time code signal to be recorded using real time when the VTR is in the recording mode, but, in this case, there is the problem that the time code becomes discontinuous if the recording is interrupted.

On the other hand, a time code signal generator having a so-called JAM SYNC function has been proposed. With this time code signal generator, it is possible after the recording has been interrupted for the time code signal to be recorded using a kind of extrapolation, so that it follows on sequentially from prior to the interruption. However, in a conventional time code signal generator, if a drop-out occurs in the time code signal, its sequence is broken and it becomes unstable, or the circuitry thereof is complicated and hence the time code signal generator is expensive.

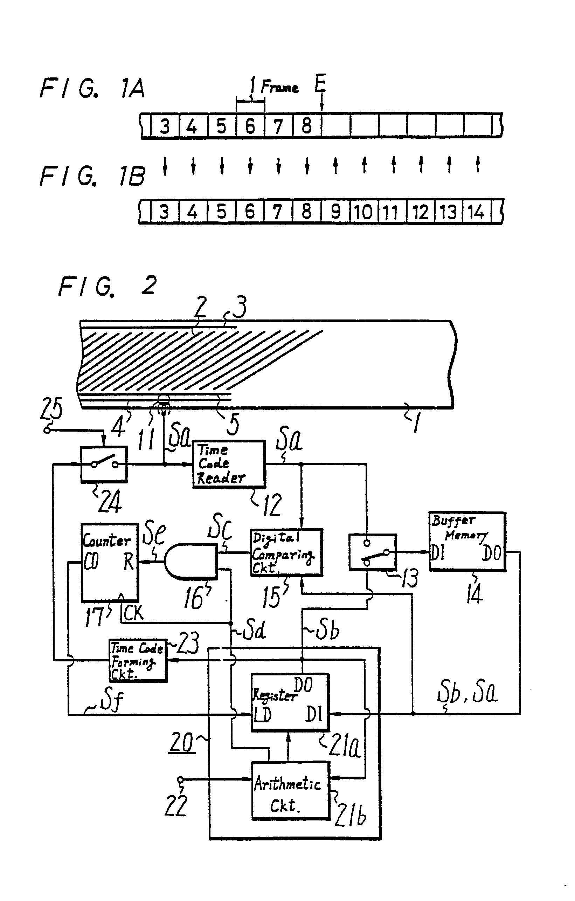

Figure 1A of the accompanying drawing diagrammatically shows a pattern of a time code signal portion recorded on the tape of a VTR. A letter E represents an end or editing point of the recording. Using the JAM SYNC mode, if the recording is continued after the editing point E, a time code such as 9, 10... is recorded following « 8 » as show in Figure 1A. Therefore, it is necessary to provide a time code signal generator capable of producing such a time code signal. To achieve this, the apparatus is switched to the reproducing mode after the tape has been rewound by a small amount back from the editing point E, the output of the time code signal generator is made coincident with the time code read out from the tape, and then a time code which is incremented at every frame is generated, so that a time code with a code pattern as seen in Figure 1B of the accompanying drawing is produced. Accordingly, if the magnetic head for the time code signal is switched to the recording mode at the editing point E so as to record the time code signal thus produced, the required successive time codes can be obtained. The arrows in Figures 1A and 1B diagrammatically represent the directions in which the time code signals are supplied.

However, in practical operation, there is the possibility that a drop-out may occur in the reproduced time code signal so that the reproduced time code signal is read out erroneously. Thus, it is necessary to make some provision for dealing with this problem. There has been previously proposed an error correction method in GB-A-2 067 053. However, when this error correction method is to be used for the JAM SYNC mode, the circuitry required is complicated.

« Radio Mentor Electronic » Vol 43 (1977), issue 8, pages 325 to 327 discloses an arrangement for keeping an audio signal in synchronism with a cine picture, the degree of synchronism required being high, but the time code changing only once every twenty-five images and therefore needing to be interpolated (or extrapolated if lost).

FR-A-2 361 029 (equivalent to GB-A-1 550 315) discloses video tape editing apparatus comprising first means for inserting a first address signal in a vertical blanking period of a video signal recorded on a video track of a tape, second means for generating a second address signal recorded on a longitudinal track of the tape, respective reading circuits for reading the first and second address signals, and means for controlling the first and second means in response to the outputs of the reading circuits.

According to the present invention there is provided a time code signal generator for a tape recorder, the time code signal generator comprising :

a time code generator for generating a first time code signal incrementally in response to a synchronizing signal ;

a time code reader for reading a second time code signal reproduced from the tape recorder ;

a comparator connected to said time code generator and to said time code reader for comparing said first time code signal with said second time code signal to produce an output signal representing an inconformity between said first and second time code signals ;

characterised by :

a counter connected to said comparator and to said time code generator for counting increments of said first time code signal in response to an output signal from said comparator ; and

means connected to said counter and forming part of said time code generator, which is operative in response to an output of said counter to change the output of said time code generator to correspond to said second time code signal, said output of said counter being supplied to said means when the count of said counter exceeds a predetermined value.

The invention will now be described by way of example with reference to the accompanying drawing, in which :

Figures 1A and 1B are diagrams used to explain the problem with which the invention is concerned ; and

Figure 2 is a block diagram showing an embodiment of time code signal generator according to the invention.

Figure 2 shows the embodiment of time code signal generator in the so-called JAM SYNC mode.

A magnetic tape 1 of a VTR (not shown) carries oblique video tracks 2, a longitudinal control track 3, longitudinal audio track 4 and a longitudinal auxiliary track 5. On this auxiliary track 5 is recorded a time code signal Sa. The time code signal Sa is reproduced by a magnetic head 11 and is read out by a time code reader 12. The magnetic head 11 is used not only to reproduce the time code signal Sa, but also to record the time code signal Sa, as will be described later.

A time code generator 20 comprises a register 21a and an arithmetic circuit 21b. The generator 20 is so arranged that the arithmetic circuit 21b increments an output time code signal Sb supplied from an output DO of the register 21a at every frame in response to a vertical synchronizing signal being supplied thereto through a terminal 22, which incremented time code signal Sb is then supplied to the register 21a.

A switching circuit 13 alternately supplies the time code signals Sa and Sb within one frame period, and is arranged to be changed as shown in the figure only when, for example, the time code reader 12 reads out the sync word which forms part of the time code. A buffer memory 14 memorizes the output from the switching circuit 13 and the time code signal generator also includes a digital comparator 15 and a quaternary counter 17. The digital comparator 15 is so formed that when its inputs to be compared are the same, it makes its output signal Sc« 1 » during the same period. Also, upon each incrementing, the time code generator 20 supplies a pulse signal Sd.

The time code signal Sb derived from the register 21a is written in the buffer memory 14 by way of the switching circuit 13 and next, this time code signal Sb is read out from the buffer memory 14 and supplied to the digital comparator 15, to which the time code signal Sa and Sb are compared with each other.

The time code signals Sa and Sb are both the same only when the time code signal Sa is reproduced correctly, so the compared output signal Sc from the comparator 15 is then « 1 ». The signal Sc is supplied to an AND circuit 16 and in addition, the pulse signal Sd having the frame period is supplied from the arithmetic circuit 21b to the AND circuit 16, and the AND circuit 16 produces an output signal Se which becomes « 1 » at the timing of the pulse signal Sd, and which is supplied to the quaternary counter 17 as a reset input. So long as the time code signal Sa is reproduced correctly, the operations as described above are repeatedly performed in every frame and hence the time code signal Sb which is the same as the time code signal Sa is derived from the terminal DO of the register 21a.

On the other hand, if the time code signal Sa to be reproduced contains a drop-out, then since the time code signal Sa is not coincident with the time code signal Sb, the signal Sc becomes « 0 » and since the signal Se is then « 0 », the quaternary counter 17 is not reset. At this time, the pulse signal Sd is supplied to the quaternary counter 17 as the count input, so that the count value of the quaternary count 17 becomes « 1 ».

During the next frame period, the time code signals Sa and Sb are compared with one another again by the digital comparator 15. But, assuming that the time code signal Sa has recovered from the drop-out, since the time code signals Sa and Sb are coincident in this frame period and the signal Sc becomes « 1 » and the signal Se becomes « 1 », the quaternary counter 17 is reset. Accordingly, when the drop-out in the time code signal Sa lasts for only one frame period, then because of the arithmetic circuit 21b, the incremental property of the time code signal Sb is maintained, and the time code signal Sb is supplied to the terminal DO of the register 21a. In other words, even if the time code signal Sa contains a drop-out, this drop-out is corrected.

Likewise, if the drop-out is of up to three frame periods,it can be corrected.

When the time code is recorded in the JAM SYNC mode, the tape 1 is rewound a little, for example, to a point several seconds prior to the editing point E. For this reason, upon starting the editing of the tape 1, the VTR is started in the reproducing mode and the time code signal as well as the video and audio signals are reproduced by the magnetic head 11. Consequently, the output time code signal Sb from the time code generator 20 and the output time code signal Sa reproduced by the magnetic head 11 and read out at the time code reader 12 have inconformity with each other for four frame periods or more. Accordingly, after four frame periods, the count value of the quaternary counter 17 is changed from « 3 » to « 0 » and at this time, from the quaternary counter 17 is produced a carry output signal Sf which is supplied to the register 21a as a load signal. At that time, the reproduced time code signal Se derived from the time code reader 12 is written in the buffer memory 14 through the switching circuit 13 and the time code signal Sa read out from the buffer memory 14 is supplied to a terminal DI of the register 21a. Therefore, when the carry output signal Sf is produced, the reproduced time code signal Sa is loaded into the register 21a, so that the content (time code signal Sb) of the register 21a is made coincident with the time code signal Sa. Thereafter, since the time code coincided with the time code signal Sa is incremented in turn by the arithmetic circuit 21b,

the coincidence with the time code signal Sa which is reproduced from the tape 1 is achieved. The time code signal Sb derived from the terminal DO of the register 21a is supplied through a time code forming circuit 23 to a recording switch 24. The time code forming circuit 23 is provided for converting the time code signal Sb to the SMPTE (or other required) time code format. When the tape 1 arrives at the editing point E, a recording signal from an editing machine (not shown) is applied to the recording switch 24 through a terminal 25, by which a time code successive to the time code already recorded on the tape 1 as illustrated in Figure 1B is recorded on the tape 1 by the magnetic head 11. In this case, upon recording, since the time code signal Sb is as it is supplied to the time code reader 12 as the time code signal Sa, the time code signals Sa and Sb are always made coincident with one other. Therefore, it is possible to use the same circuit as the circuit upon reproducing.

Although it is arranged in the embodiment as set forth above that the time code signal Sb is changed to the time code signal Sa if the inconformity between the time code signal Sb to the time code signal Sa occurs four times in succession, the counter 17 may effect the change at a count other than four.

## Claims

1. A time code signal generator for a tape recorder the time code signal generator comprising :

a time code generator (20) for generating a first time code signal incrementally in response to a synchronizing signal ;

a time code reader (12) for reading a second time code signal reproduced from the tape recorder ;

a comparator (15) connected to said time code generator (20) and to said time code reader (12) for comparing said first time code signal with said second time code signal to produce an output signal representing an inconformity between said first and second time code signals ;

characterised by :

a counter (17) connected to said comparator (15) and to said time code generator (20) for counting increments of said first time code signal in response to an output signal from said comparator (15) ; and

means (21a) connected to said counter (17) and forming part of said time code generator (20), which is operative in response to an output of said counter (17) to change the output of said time code generator (20) to correspnd to said second time code signal, said output of said counter (17) being supplied to said means (21a) when the count of said counter (17) exceeds a predetermined value.

2. A time code signal generator according to claim 1 wherein said time code generator (20) comprises a register (21a) forming said means (21a) and an arithmetic circuit (21b) for calculating an output from said register (21a) sequentially.

3. A time code signal generator according to claim 1 or claim 2 further comprising a memory (14) for storing said first time code signal and said second time code signal respectively.

4. A time code signal generator according to claim 1, claim 2 or claim 3 wherein said first time code signal is incremented in every frame period.

## Patentansprüche

1. Zeitcodesignalgenerator für einen Bandrecorder, mit einem Zeitcode-Generator (20) für die inkrementelle Erzeugung eines ersten Zeitcodesignals auf ein Synchronisiersignal hin,

mit einer Zeitcode-Leseeinrichtung (12) zum Lesen eines von dem Bandrecorder wiedergegebenen zweiten Zeitcodesignals,

mit einem Komparator (15), der mit dem Zeitcode-Generator (20) und der Zeitcode-Leseeinrichtung (12) verbunden ist zum Vergleichen des ersten Zeitcodesignals mit dem zweiten Zeitcodesignal zur Erzeugung eines Ausgangssignals, welches kennzeichnend ist für eine fehlende Übereinstimmung zwischen dem ersten und dem zweiten Zeitcodesignal, gekennzeichnet durch einen mit dem Komparator (15) und dem Zeitcode-Generator (20) verbundenen Zähler (17) zum Zählen der Inkremente des ersten Zeitcodesignals auf ein Ausgangssignal von dem Komparator (15) hin ; und

eine mit dem Zähler (17) verbundene Einrichtung (21a), die abhängig von einem Ausgangssignal des Zählers (17) derart betrieben ist, daß das Ausgangssignal des Zeitcode-Generators (20) so geändert wird, daß es dem zweiten Zeitcodesignal entspricht, wobei das Ausgangssignal des Zählers (17) der Einrichtung (21a) zugeführt wird, wenn der Zählerstand des Zählers einen vorgegebenen Wert überschreitet.

2. Zeitcodesignalgenerator nach Anspruch 1, wobei der Zeitcode-Generator (20) ein die Einrichtung bildendes Register (21a) und eine Rechenschaltung (21b) für eine aufeinanderfolgende Berechnung eines Ausgangssignals von dem Register (21a) umfaßt.

3. Zeitcodesignalgenerator nach Anspruch 1 oder Anspruch 2, wobei ferner ein Speicher (14) zur Speicherung des ersten Zeitcodesignals bzw. des zweiten Zeitcodesignals vorgesehen ist.

4. Zeitcodesignalgenerator nach Anspruch 1, Anspruch 2 oder Anspruch 3, wobei das erste Zeitcodesignal in jeder Bildperiode inkrementiert wird.

## Revendications

1. Générateur de signaux de code de temps pour enregistreur sur bande, le générateur de signaux de code de temps comportant :

un générateur de code de temps (20) qui produit un premier signal de code de temps de façon incrémentale en réponse à un signal de synchronisation ;

un lecteur de code de temps (12) destiné à lire un deuxième signal de code de temps reproduit à partir de l'enregistreur sur bande ;

un comparateur (15) connecté audit générateur de code de temps (20) et audit lecteur de code de temps (12) pour comparer ledit premier signal de code de temps avec ledit deuxième signal de code de temps afin de produire un signal de sortie représentant un manque de conformité entre lesdits premier et deuxième signaux de code de temps ;

caractérisé par :

un compteur (17) connecté audit comparateur (15) et audit générateur de code de temps (20) pour compter des incréments dudit premier signal de code de temps en réponse à un signal de sortie dudit comparateur (15) ; et

un moyen (21a) connecté audit compteur (17) et faisant partie dudit générateur de code de temps (20), qui a pour fonction, en réponse à un signal de sortie dudit compteur (17), de changer le signal de sortie dudit générateur de code de temps (20) pour qu'il corresponde audit deuxième signal de code de temps, ledit signal de sortie dudit compteur (17) étant délivré audit moyen (21a) lorsque la valeur de comptage dudit compteur (17) dépasse une valeur prédéterminée.

2. Générateur de signaux de code de temps selon la revendication 1, où ledit générateur de code de temps (20) comporte un registre (21a) formant ledit moyen (21a) et un circuit arithmétique (21b) servant à calculer séquentiellement un signal de sortie dudit registre (21a).

3. Générateur de signaux de code de temps selon la revendication 1 ou 2, comprenant en outre une mémoire (14) servant à mémoriser respectivement ledit premier signal de code de temps et ledit deuxième signal de code de temps.

4. Générateur de signaux de code de temps selon la revendication 1, 2 ou 3, où ledit signal de code de temps est incrémenté à chaque période d'image complète.

FIG. 1A

1 Frame   E

| | 3 | 4 | 5 | 6 | 7 | 8 | | | | | | |

FIG. 1B

↓ ↓ ↓ ↓ ↓ ↑ ↑ ↑ ↑ ↑ ↑ ↑

| 3 | 4 | 5 | 6 | 7 | 8 | 9 | 10 | 11 | 12 | 13 | 14 |

FIG. 2

1